# EUROPEAN PATENT APPLICATION

(11) **EP 4 840 697 A1**
(43) Date of publication of application: **18.11.2026**
(21) Application number: 24916246.2
(22) Date of filing: 19.04.2024
(51) Int. Cl.: B60N 3/00, B60R 7/06

(54) **SUPPORT ASSEMBLY, TABLE BOARD ASSEMBLY, FRONT VEHICLE BODY STRUCTURE, AND VEHICLE**

(30) Priority: 12.01.2024 CN 202410049251; 12.01.2024 CN 202420081408 U
(71) Applicant: Guangzhou Automobile Group Co., Ltd., Guangzhou, Guangdong 511434 (CN)
(72) Inventor: LI, Zhoalei, Guangzhou, Guangdong 511434 (CN); HUANG, Xianrong, Guangzhou, Guangdong 511434 (CN); FENG, Yu, Guangzhou, Guangdong 511434 (CN); TANG, Xiaojian, Guangzhou, Guangdong 511434 (CN); XIAO, Wei, Guangzhou, Guangdong 511434 (CN)
(74) Representative: Metida
(86) International application number: PCT/CN2024/088764
(87) International publication number: WO 2025/148188

(57) **Abstract**

The present application provides a bracket assembly, a table board assembly, a front structure of a vehicle body, and a vehicle. A first end of a first bracket is provided with a connecting shaft. A first end of a second bracket is rotatably mounted on the connecting shaft. A ratchet wheel is mounted on the connecting shaft, and includes a ratchet wheel body and a locking groove formed in the ratchet wheel body. A transition wheel is rotatably mounted on the connecting shaft and is provided with a limiting protrusion, and the outer diameter of the limiting protrusion is larger than that of the ratchet wheel body. A first end of a pawl is rotatably mounted on the second bracket, and a second end of the pawl is connected to any one of the locking groove, the limiting protrusion and the ratchet wheel body, so as to adjust the working state of the bracket assembly. In the present application, by rotating the second bracket, the first end of the second bracket is rotated around the connecting shaft, which is capable of driving the pawl to rotate, such that the second end of the pawl is connected with any one of the locking groove, the limiting protrusion and the ratchet wheel body, so as to adjust the working state of the bracket assembly, which facilitates unfolding and retraction of the bracket assembly.

## Description

### TECHNICAL FIELD

The present application belongs to the technical field of bracket assemblies, and particularly relates to a bracket assembly, a table board assembly, a front structure of a vehicle body, and a vehicle.

### BACKGROUND

Currently, a plurality of devices are equipped with bracket assemblies to mount table boards or other equipment. However, existing bracket assemblies (such as four-bar brackets) are prone to limitations in adjustment and cannot be adjusted to a comfortable opening height. For example, as vehicles are now developed with a user-centric approach and based on usage scenarios, more and more features such as table board bodies are being developed in the passenger cabin. Typically, the table board bodies for the second row are located on the back of the front seats. The seat back can provide an appropriate height to accommodate a traditional four-bar bracket. The bracket assembly can be adjusted to a comfortable opening height, and the table board body can be positioned at a comfortable height after unfolding. However, when a table board body is mounted on the passenger side, the existing four-bar bracket cannot be adjusted to a comfortable opening height due to space constraints. It is difficult to reach a comfortable range height for the table board body, resulting in a poor user experience.

### SUMMARY

The present application provides a bracket assembly, a table board assembly, a front structure of a vehicle body, and a vehicle, to solve the problem that existing bracket assemblies are incapable of being adjusted to a comfortable unfolded height.

A bracket assembly includes a first bracket, a second bracket, a ratchet wheel, a transition wheel and a pawl.

A first end of the first bracket is provided with a connecting shaft.

A first end of the second bracket is rotatably mounted on the connecting shaft.

The ratchet wheel is mounted on the connecting shaft, and the ratchet wheel includes a ratchet wheel body and a locking groove formed in the ratchet wheel body.

The transition wheel is rotatably mounted on the connecting shaft and is provided with a limiting protrusion, the projection of the limiting protrusion along an axial direction of the connecting shaft is partially located outside the projection of the ratchet wheel body along the axial direction of the connecting shaft.

A first end of the pawl is rotatably mounted on the second bracket, and a second end of the pawl is connected to any one of the locking groove, the limiting protrusion and the ratchet wheel body, so as to adjust the working state of the bracket assembly.

Preferably, the bracket assembly further includes a spring.

A first end of the spring is fixed on the second bracket, and a second end of the spring is connected to the second end of the pawl.

Preferably, the transition wheel is provided with a limiting groove.

The bracket assembly further includes a limiting pin, and the limiting pin is fixed on the ratchet wheel by means of penetrating through the limiting groove.

Preferably, the second bracket includes a first connecting portion, a second connecting portion and a third connecting portion obliquely extending outwards in a same direction from both ends of the first connecting portion, a fourth connecting portion extending out at an obtuse angle from the outer side of one end of the second connecting portion, a fifth connecting portion extending out at an obtuse angle from the outer side of one end of the third connecting portion, and a connecting disc extending out from the fourth connecting portion.

The connecting disc is rotatably mounted on the connecting shaft, the fifth connecting portion is configured to connect with an object to be used, and the first end of the pawl is rotatably mounted on the second connecting portion.

A table board assembly includes the bracket assembly, a crossbeam, and a table board body.

A second end of the first bracket of the bracket assembly is fixed on the crossbeam.

A second end of the second bracket of the bracket assembly is rotatably connected to the tablet board body.

Preferably, the table board body is provided with at least one mounting groove, and each of the at least one mounting groove is internally provided with one second bracket.

Preferably, the mounting groove is a strip-shaped groove, and the second end of the second bracket is rotatably mounted in the strip-shaped groove.

A front structure of a vehicle body includes the table board assembly and a sub-frame instrument assembly.

The crossbeam of the table board assembly is fixed on the sub-frame instrument assembly.

Preferably, when the table board body is in an optimal unfolded state, the height difference between the tabletop height and the vehicle hip point height is 250-300 mm.

A vehicle includes the front structure of the vehicle body.

According to the present application, the bracket assembly includes the first bracket, the second bracket, the ratchet wheel, the transition wheel and the pawl. The first bracket serves as a supporting piece, the first end of the first bracket is provided with the connecting shaft for mounting main parts of the bracket assembly, and the second end of the first bracket is configured to connect to a reference piece. The first end of the second bracket is rotatably mounted on the connecting shaft, and the second end of the second bracket is configured to connect with an object to be used. The ratchet wheel is mounted on the connecting shaft, and the ratchet wheel includes a ratchet wheel body and a locking groove formed in the ratchet wheel body. The locking groove is located on the periphery of the ratchet wheel body to provide a locking position for the pawl. The transition wheel is rotatably mounted on the connecting shaft and is provided with a limiting protrusion. The projection of the limiting protrusion along the axial direction of the connecting shaft is partially located outside the projection of the ratchet wheel body along the axial direction of the connecting shaft, which facilitates moving the second end of the pawl from the locking groove onto the limiting protrusion. Specifically, the ratchet wheel body is fixed on the connecting shaft, and the first end of the second bracket and the transition wheel are both mounted on the connecting shaft in a sleeving mode, and located on both sides of the ratchet wheel body, thereby making the structure of the bracket assembly more compact and providing convenience for adjusting the bracket assembly. The first end of the pawl is rotatably mounted on the second bracket, and the second end of the pawl is connected to any one of the locking groove, the limiting protrusion and the ratchet wheel body. In use, by rotating the second bracket, the first end of the second bracket is rotated around the connecting shaft, which is capable of driving the pawl to rotate, such that the second end of the pawl is connected with any one of the locking groove, the limiting protrusion and the ratchet wheel body, so as to adjust the working state of the bracket assembly. The specific adjustment process is as follows: first, the second bracket is rotated clockwise, and when the second end of the pawl is connected with the locking groove, the pawl is in a locked state, such that the bracket assembly is in the optimal unfolded state; then the second bracket continues to be rotated clockwise, driving the second end of the pawl to move from the locking groove onto the limiting protrusion, and the pawl is in a transition state to switch the bracket assembly from the optimal unfolded state to the adjustment state; then the second bracket is rotated anticlockwise, the friction force between the second end of the pawl and the limiting protrusion is used for driving the transition wheel to rotate around the connecting shaft, such that the limiting protrusion is capable of concealing the locking groove, the second end of the pawl will not enter the locking groove and is capable of moving directly from the limiting protrusion to the ratchet wheel body, and the pawl is in the unlocked state to switch the bracket assembly from the adjustment state to the retracted state; and then the second bracket is rotated until the bracket assembly is fully retracted. This arrangement facilitates the unfolding and retraction of the bracket assembly. In this example, the locking groove is formed in the ratchet wheel body. The mounting position of the locking groove is capable of being adjusted according to the actual situation, such that when the bracket assembly is fully unfolded, the height of the object to be used reaches a comfortable range, improving the user experience.

The existing bracket assembly (four-bar bracket) is placed on the passenger side. After the bracket assembly is unfolded, it is difficult to reach a comfortable range for the height of a table board body, and the table board body will interfere with the passenger's knees. To solve the above problems, the bracket assembly in this example can be mounted in a feasible position on the passenger side. In use, by rotating the second bracket, the first end of the second bracket is rotated around the connecting shaft, which is capable of driving the pawl to rotate, such that the second end of the pawl is connected with any one of the locking groove, the limiting protrusion and the ratchet wheel body, so as to adjust the working state of the bracket assembly, which facilitates unfolding and retraction of the bracket assembly. The locking groove is formed in the ratchet wheel body, the mounting position of the locking groove is capable of being adjusted according to the actual situation, such that when the bracket assembly is fully unfolded, the height of the table board body reaches an appropriate range, preventing interference with the passenger's knees and creating a comfortable usage scenario for the front passenger. This enhances the differentiated experience of users and improves product competitiveness.

### BRIEF DESCRIPTION OF THE DRAWINGS

FIG. 1 is a front view of a bracket assembly in the present application;
FIG. 2 is a sectional view of the bracket assembly in the present application;
FIG. 3 is an axonometric view of a table board assembly in the present application;
FIG. 4 s an axonometric view of a front structure of a vehicle body in the present application;
FIG. 5 is a first state diagram of the table board assembly in the present application;
FIG. 6 is a second state diagram of the table board assembly in the present application;
FIG. 7 is a third state diagram of the table board assembly in the present application; and
FIG. 8 is a fourth state diagram of the table board assembly in the present application.

Reference numerals: 1. first bracket; 2. second bracket; 21. first connecting portion; 22. second connecting portion; 23. third connecting portion; 24. fourth connecting portion; 25. fifth connecting portion; 26. connecting disc; 3. ratchet wheel; 31. ratchet wheel body; 32. locking groove; 4. transition wheel; 41. limiting protrusion; 42. limiting groove; 5. pawl; 6. connecting shaft; 7. spring; 8. limiting pin; 9. crossbeam; 10. table board body; 11. mounting groove; 12. sub-frame instrument assembly.

### DETAILED DESCRIPTION

To make the technical problem, technical solutions, and beneficial effects of the present application clearer, the present application will be further described in detail below with reference to the accompanying drawings and embodiments. It should be understood that the specific embodiments described herein are merely illustrative of the present disclosure and are not intended to limit the present disclosure.

In the description of the present application, it should be understood that descriptions involving orientation, such as the orientations or positional relationships indicated by terms such as "longitudinal", "radial", "length", "width", "thickness", "upper", "lower", "front", "back", "left", "right", "vertical", "horizontal", "top", "bottom", "inside", "outside" are based on the orientations or positional relationships shown in the accompanying drawings. They are only for the convenience of describing the present application and simplifying the description, and do not indicate or imply that the device or element referred to must have a specific orientation, be constructed and operated in a specific orientation. Therefore, they cannot be understood as limitations on the present application. In the description of the present application, unless otherwise stated, "plurality of" means two or more.

In the description of the present application, it should be noted that, unless otherwise expressly specified or limited, the terms "mounted", "connected", and "connection" should be understood in a broad sense, for example, it can be a fixed connection, or a detachable connection, or an integral connection; it can be a mechanical connection or an electrical connection; it can be direct connection, or indirect connection through an intermediate medium, or an internal connection between two elements. For those of ordinary skill in the art, the specific meanings of the above terms in the present disclosure may be understood in specific cases.

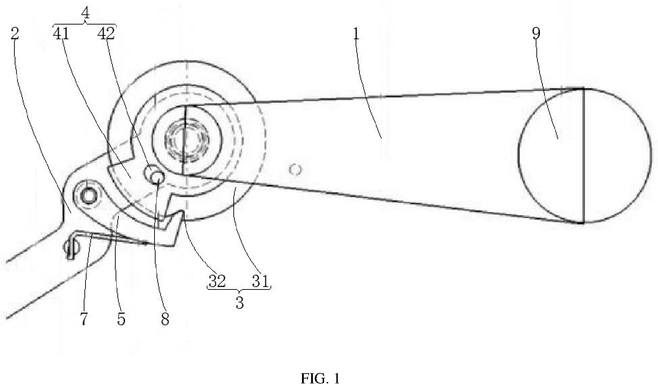

An embodiment of the present application provides a bracket assembly. Referring to FIGS. 1-4, the bracket assembly includes a first bracket 1, a second bracket 2, a ratchet wheel 3, a transition wheel 4 and a pawl 5. A first end of the first bracket 1 is provided with a connecting shaft 6. A first end of the second bracket 2 is rotatably mounted on the connecting shaft 6. The ratchet wheel 3 is mounted on the connecting shaft 6, and the ratchet wheel 3 includes a ratchet wheel body 31 and a locking groove 32 formed in the ratchet wheel body 31. The transition wheel 4 is rotatably mounted on the connecting shaft 6 and is provided with a limiting protrusion 41, the projection of the limiting protrusion 41 along an axial direction of the connecting shaft 6 is partially located outside the projection of the ratchet wheel body 31 along the axial direction of the connecting shaft 6. A first end of the pawl 5 is rotatably mounted on the second bracket 2, and a second end of the pawl 5 is connected to any one of the locking groove 32, the limiting protrusion 41 and the ratchet wheel body 31 to adjust the working state of the bracket assembly.

As an example, the bracket assembly includes a first bracket 1, a second bracket 2, a ratchet wheel 3, a transition wheel 4 and a pawl 5. The first bracket serves 1 as a supporting piece, a first end of the first bracket 1 is provided with a connecting shaft 6 for mounting main parts of the bracket assembly, and a second end of the first bracket 1 is configured to connect to a reference piece. A first end of the second bracket 2 is rotatably mounted on the connecting shaft 6, and a second end of the second bracket 2 is configured to connect with an object to be used. The ratchet wheel 3 is mounted on the connecting shaft 6, and the ratchet wheel 3 includes a ratchet wheel body 31 and a locking groove 32 formed in the ratchet wheel body 31. The locking groove 32 is a structure formed by inward indentation from the outer edge of the ratchet wheel body 31, to provide a locking position for the pawl 5. The transition wheel 4 is rotatably mounted on the connecting shaft 6 and is provided with a limiting protrusion 41. The projection of the limiting protrusion 41 along the axial direction of the connecting shaft 6 is partially located outside the projection of the ratchet wheel body 31 along the axial direction of the connecting shaft 6, which facilitates moving a second end of the pawl 5 from the locking groove 32 onto the limiting protrusion 41. Specifically, the ratchet wheel body 31 is fixed on the connecting shaft 6, and the first end of the second bracket 2 and the transition wheel 4 are both mounted on the connecting shaft 6 in a sleeving mode, and located on both sides of the ratchet wheel body 31, thereby making the structure of the bracket assembly more compact and providing convenience for adjusting the bracket assembly. A first end of the pawl 5 is rotatably mounted on the second bracket 2, and the second end of the pawl 5 is connected to any one of the locking groove 32, the limiting protrusion 41 and the ratchet wheel body 31. In use, by rotating the second bracket 2, the first end of the second bracket 2 is rotated around the connecting shaft 6, which is capable of driving the pawl 5 to rotate, such that the second end of the pawl 5 is connected with any one of the locking groove 32, the limiting protrusion 41 and the ratchet wheel body 31, so as to adjust the working state of the bracket assembly. The specific adjustment process is as follows: first, the second bracket 2 is rotated clockwise, and when the second end of the pawl 5 is connected with the locking groove 32, the pawl 5 is in a locked state, such that the bracket assembly is in the optimal unfolded state; then the second bracket 2 continues to be rotated clockwise, driving the second end of the pawl 5 to move from the locking groove 32 onto the limiting protrusion 41, and the pawl 5 is in a transition state to switch the bracket assembly from the optimal unfolded state to the adjustment state; then the second bracket 2 is rotated anticlockwise, the friction force between the second end of the pawl 5 and the limiting protrusion 41 is used for driving the transition wheel 4 to rotate around the connecting shaft 6, such that the limiting protrusion 41 is capable of concealing the locking groove 32, the second end of the pawl 5 will not enter the locking groove 32 and is capable of moving directly from the limiting protrusion 41 to the ratchet wheel body 31, and the pawl 5 is in the unlocked state to switch the bracket assembly from the adjustment state to the retracted state; and then the second bracket 2 is rotated until the bracket assembly is fully retracted. This arrangement facilitates the unfolding and retraction of the bracket assembly. In this example, the locking groove 32 is formed in the ratchet wheel body 31. The mounting position of the locking groove 32 is capable of being adjusted according to the actual situation, so 31 that when the bracket assembly is fully extended, the height of the object to be used reaches a comfortable range, improving the user experience.

The existing bracket assembly (four-bar bracket) is placed on the passenger side. After the bracket assembly is unfolded, it is difficult to reach a comfortable range for the height of a table board body 10 and the table board body will interfere with the passenger's knees. To solve the above problems, the bracket assembly in this example can be mounted in a feasible position on the passenger side. In use, by rotating the second bracket 2, the first end of the second bracket 2 is rotated around the connecting shaft 6, which is capable of driving the pawl 5 to rotate, such that the second end of the pawl 5 is connected with any one of the locking groove 32, the limiting protrusion 41 and the ratchet wheel body 31, so as to adjust the working state of the bracket assembly, which facilitates unfolding and retraction of the bracket assembly. The locking groove 32 is formed in the ratchet wheel body 31, the mounting position of the locking groove 32 is capable of being adjusted according to the actual situation, such that when the bracket assembly is fully unfolded, the height of the table board body 10 reaches an appropriate range, preventing interference with the passenger's knees and creating a comfortable usage scenario for the front passenger. This enhances the differentiated experience of users and improves product competitiveness.

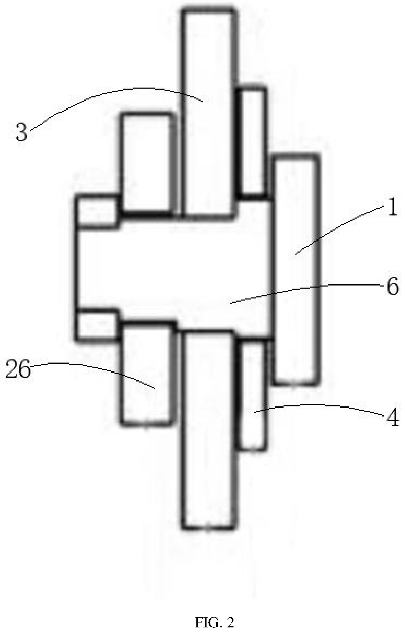

In one embodiment, referring to FIG. 1 and FIG. 2, the bracket assembly further includes a spring 7. A first end of the spring 7 is fixed on the second bracket 2, and a second end of the spring 7 is connected to the second end of the pawl 5.

As an example, the bracket assembly further includes a spring 7. A first end of the spring 7 is fixed on the second bracket 2, and a second end of the spring 7 is connected to the second end of the pawl 5. The elasticity of the spring 7 is configured to keep the second end of the pawl 5 tending towards the ratchet wheel 3 all the time, such that the pawl 5 is capable of being connected to any one of the locking groove 32, the limiting protrusion 41 and the ratchet wheel body 31, so as to adjust the working state of the bracket assembly. When the second end of the pawl 5 is moved from the locking groove 32 onto the limiting protrusion 41, the second end of the pawl 5 will rotate clockwise around the first end of the pawl 5, the spring 7 is compressed, generating elastic force to make the second end of the pawl 5 rotate anticlockwise around the first end of the pawl 5.

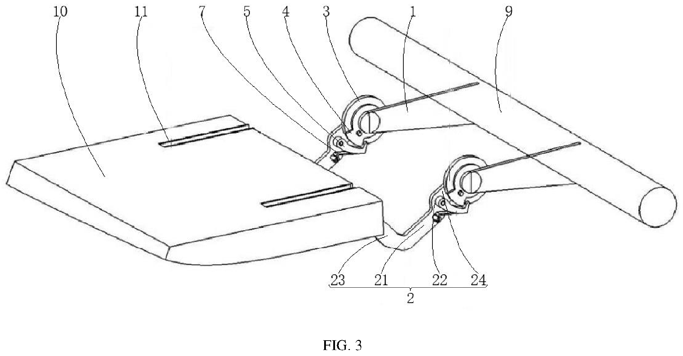

In one embodiment, referring to FIG. 1 and FIG. 3, the transition wheel 4 is provided with a limiting groove 42. The bracket assembly further includes a limiting pin 8, and the limiting pin 8 is fixed on the ratchet wheel 3 by means of penetrating through the limiting groove 42.

As an example, the transition wheel 4 is provided with a limiting groove 42 which is an arc-shaped groove. The bracket assembly further includes a limiting pin 8, and the limiting pin 8 is fixed on the ratchet wheel 3 by means of penetrating through the limiting groove 42, which is capable of limiting the range of rotation of the transition wheel 4 around the connecting shaft 6, thereby limiting the range of rotation of the limiting protrusion 41 under the action of the second end of the pawl 5, so as to achieve the concealment or non-concealment of the locking groove 32. When the second bracket 2 is rotated clockwise, the second end of the pawl 5 moves out of the locking groove 32, and the side of the limiting groove 42 close to the locking groove 32 is connected to the limiting pin 8, keeping the transition wheel 4 and the limiting protrusion 41 stationary. Under the action of power, the first end of the pawl 5 will rotate, causing the second end of the pawl 5 to press the spring 7 open at a certain angle, and then to transit to the limiting protrusion 41. Then, the second bracket 2 is rotated anticlockwise, causing the second end of the pawl 5 along with the limiting protrusion 41 and the transition wheel 4 to rotate anticlockwise around the connecting shaft 6. When the side of the limiting groove 42 of the transition wheel 4 away from the locking groove 32 is connected to the limiting pin 8, the limiting protrusion 41 conceals the locking groove 32, and the second end of the pawl 5 is moved from the limiting protrusion 41 to the ratchet wheel body 31, facilitating retraction of the bracket assembly.

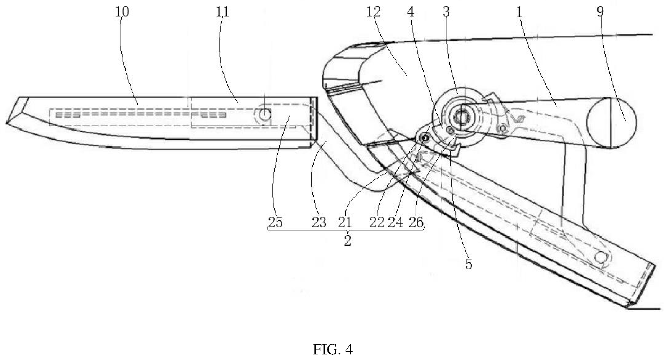

In one embodiment, referring to FIG. 4, the second bracket 2 includes a first connecting portion 21, a second connecting portion 22 and a third connecting portion 23 obliquely extending outwards in a same direction from both ends of the first connecting portion 21, a fourth connecting portion 24 extending out at an obtuse angle from the outer side of one end of the second connecting portion 22, a fifth connecting portion 25 extending out at an obtuse angle from the outer side of one end of the third connecting portion 23, and a connecting disc 26 extending out from the fourth connecting portion 24. The connecting disc 26 is rotatably mounted on the connecting shaft 6, the fifth connecting portion 25 is configured to connect with an object to be used, and the first end of the pawl 5 is rotatably mounted on the second connecting portion 22.

As one example, the second bracket 2 includes a first connecting portion 21, a second connecting portion 22, a third connecting portion 23, a fourth connecting portion 24, a fifth connecting portion 25 and a connecting disc 26. The second connecting portion 22 and the third connecting portion 23 obliquely extend outwards in the same direction from both ends of the first connecting portion 21, the fourth connecting portion 24 extends out at an obtuse angle from the outer side of one end of the second connecting portion 22, the fifth connecting portion 25 extends out at an obtuse angle from the outer side of one end of the third connecting portion 23, and the connecting disc 26 extends out from the fourth connecting portion 24. The fifth connecting portion 25 is configured to connect with an object to be used, and the first end of the pawl 5 is rotatably mounted on the second connecting portion 22. The length of the third connecting portion 23 is larger than that of the second connecting portion 22. The connecting disc 26 is rotatably mounted on the connecting shaft 6. The fifth connecting portion 25 is configured to connect with an object to be used. The first connecting portion 21, the second connecting portion 22 and the third connecting portion 23 form an avoiding space, to provide an avoiding position for retracting an object to be used. By rotating the second bracket 2, the connecting disc 26 is rotated around the connecting shaft 6, which is capable of driving the pawl 5 to rotate, such that the second end of the pawl 5 is connected with any one of the locking groove 32, the limiting protrusion 41 and the ratchet wheel body 31, so as to adjust the working state of the bracket assembly.

An embodiment of the present application provides a table board assembly, referring to FIGS. 1-4, which includes the bracket assembly, a crossbeam 9 and a table board body 10. A second end of the first bracket 1 of the bracket assembly is fixed on the crossbeam 9. A second end of the second bracket 2 of the bracket assembly is rotatably connected to the tablet board body 10.

As one example, the table board assembly includes the bracket assembly, a crossbeam 9 and a table board body 10. The first bracket 1 serves as a supporting piece, a first end of the first bracket 1 is provided with the connecting shaft 6 for mounting main parts of the bracket assembly, and a second end of the first bracket 1 is fixed on the crossbeam 9. A first end of the second bracket 2 is rotatably mounted on the connecting shaft 6, and a second end of the second bracket 2 of the bracket assembly is rotatably connected to the table board body 10. The ratchet wheel 3 is mounted on the connecting shaft 6, and the ratchet wheel 3 includes a ratchet wheel body 31 and a locking groove 32 formed in the ratchet wheel body 31. The locking groove 32 is located on the periphery of the ratchet wheel body 31 to provide a locking position for the pawl 5. The transition wheel 4 is rotatably mounted on the connecting shaft 6 and is provided with a limiting protrusion 41. The projection of the limiting protrusion 41 along the axial direction of the connecting shaft 6 is partially located outside the projection of the ratchet wheel body 31 along the axial direction of the connecting shaft 6, which facilitates moving the second end of the pawl 5 from the locking groove 32 onto the limiting protrusion 41. Specifically, the ratchet wheel body 31 is fixed on the connecting shaft 6, and the first end of the second bracket 2 and the transition wheel 4 are both mounted on the connecting shaft 6 in a sleeving mode, and located on both sides of the ratchet wheel body 31, thereby making the structure of the bracket assembly more compact and providing convenience for adjusting the bracket assembly. A first end of the pawl 5 is rotatably mounted on the second bracket 2, and the second end of the pawl 5 is connected to any one of the locking groove 32, the limiting protrusion 41 and the ratchet wheel body 31. The bracket assembly in this example is convenient to unfold and retract when in use. By rotating the second bracket 2, the first end of the second bracket 2 is rotated around the connecting shaft 6, which is capable of driving the pawl 5 to rotate, such that the second end of the pawl 5 is connected with any one of the locking groove 32, the limiting protrusion 41 and the ratchet wheel body 31, so as to adjust the working state of the bracket assembly. The specific adjustment process is as follows: first, the second bracket 2 is rotated clockwise, and when the second end of the pawl 5 is connected with the locking groove 32, the pawl 5 is in a locked state, such that the bracket assembly is in an optimal unfolded state; then the second bracket 2 continues to be rotated clockwise, driving the second end of the pawl 5 to move from the locking groove 32 onto the limiting protrusion 41, and the pawl 5 is in a transition state to switch the bracket assembly from the optimal unfolded state to the adjustment state; then the second bracket 2 is rotated anticlockwise, the friction force between the second end of the pawl 5 and the limiting protrusion 41 is used for driving the transition wheel 4 to rotate around the connecting shaft 6, such that the limiting protrusion 41 is capable of concealing the locking groove 32, the second end of the pawl 5 will not enter the locking groove 32 and is capable of moving directly from the limiting protrusion 41 to the ratchet wheel body 31, and the pawl 5 is in the unlocked state to switch the bracket assembly from the adjustment state to the retracted state; and then the second bracket 2 is rotated until the bracket assembly is fully retracted. The locking groove 32 is formed in the ratchet wheel body 31, the mounting position of the locking groove 32 is capable of being adjusted according to the actual situation, such that when the bracket assembly is fully unfolded, the height of the table board body 10 reaches an appropriate range, preventing interference with the passenger's knees and creating a comfortable usage scenario for the front passenger. This enhances the differentiated experience of users and improves product competitiveness.

In one embodiment, referring to FIG. 3 and FIG. 4, the table board body 10 is provided with at least one mounting groove 11, and each of at least one mounting groove 11 is internally provided with one second bracket 2.

As an example, the table board body 10 is provided with at least one mounting groove 11, and each of at least one mounting groove 11 is internally provided with one second bracket 2. This arrangement allows the table board body 10 to rotate around the second end of the second bracket 2, which facilitates the adjustment of the unfolding or retracting degree of the table board body 10 to meet usage needs of people. When there is one mounting groove 11, the second end of one second bracket 2 is mounted in the mounting groove 11, which is capable of supporting the unfolding of the table board body 10. When there are two or more mounting grooves 11, the two or more mounting grooves 11 are arranged on the table board body 10 at intervals, each mounting groove 11 is internally provided with one second bracket 2, and two or more second brackets 2 play a role simultaneously to support the unfolding of the table board body 10, such that stability is better.

In one embodiment, referring to FIG. 3 and FIG. 4, the mounting groove 11 is a strip-shaped groove, and the second end of the second bracket 2 is rotatably mounted in the strip-shaped groove.

As an example, the mounting groove 11 is a strip-shaped groove, and the second end of the second bracket 2 is rotatably mounted in the strip-shaped groove. Specifically, the fifth connecting portion 25 of the second bracket 2 is placed in the strip-shaped groove, one end of the fifth connecting portion 25 is mounted in the strip-shaped groove through a rotating shaft, and one end of the table board body 10 is rotated around the rotating shaft as the base axis. In the length direction of the strip-shaped groove, the fifth connecting portion 25 has two contacts with the strip-shaped groove, that is, two positions for unfolding and retraction of the table board body 10 are limited, so as to facilitate the adjustment of the unfolding or retraction degree of the table board body 10 and meet usage needs of people.

An embodiment of the present application provides a front structure of a vehicle body, referring to FIGS. 1-4, including the table board assembly and a sub-frame instrument assembly 12. The crossbeam 9 of the table board assembly is fixed on the sub-frame instrument assembly 12.

As an example, the front structure of the vehicle body includes the table board assembly and a sub-frame instrument assembly 12. The crossbeam 9 of the table board assembly is fixed on the sub-frame instrument assembly 12. By rotating the second bracket 2, the first end of the second bracket 2 is rotated around the connecting shaft 6, which is capable of driving the pawl 5 to rotate, such that the second end of the pawl 5 is connected with any one of the locking groove 32, the limiting protrusion 41 and the ratchet wheel body 31, so as to adjust the working state of the bracket assembly. The specific adjustment process is as follows: first, the second bracket 2 is rotated clockwise, and when the second end of the pawl 5 is connected with the locking groove 32, the pawl 5 is in a locked state, such that the bracket assembly is in the optimal unfolded state; then the second bracket 2 continues to be rotated clockwise, driving the second end of the pawl 5 to move from the locking groove 32 onto the limiting protrusion 41, and the pawl 5 is in a transition state to switch the bracket assembly from the optimal unfolded state to the adjustment state; then the second bracket 2 is rotated anticlockwise, the friction force between the second end of the pawl 5 and the limiting protrusion 41 is used for driving the transition wheel 4 to rotate around the connecting shaft 6, such that the limiting protrusion 41 is capable of concealing the locking groove 32, the second end of the pawl 5 will not enter the locking groove 32 and is capable of moving directly from the limiting protrusion 41 to the ratchet wheel body 31, and the pawl 5 is in the unlocked state to switch the bracket assembly from the adjustment state to the retracted state; and then the second bracket 2 is rotated until the bracket assembly is fully retracted. The locking groove 32 is formed in the ratchet wheel body 31, the mounting position of the locking groove 32 is capable of being adjusted according to the actual situation, such that when the bracket assembly is fully unfolded, the height of the table board body 10 reaches an appropriate range, preventing interference with the passenger's knees and creating a comfortable usage scenario for the front passenger. This enhances the differentiated experience of users and improves product competitiveness.

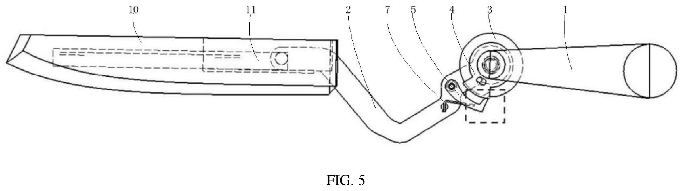

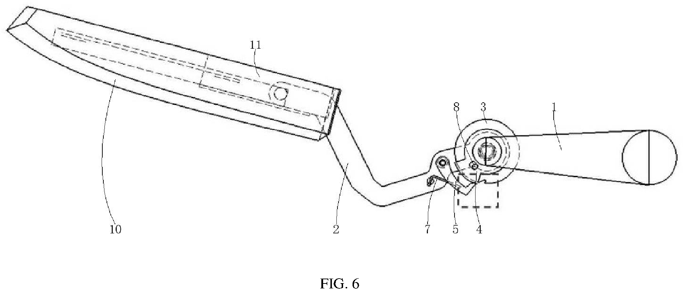

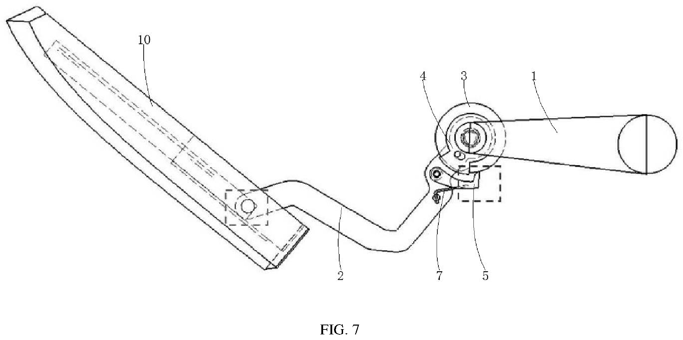

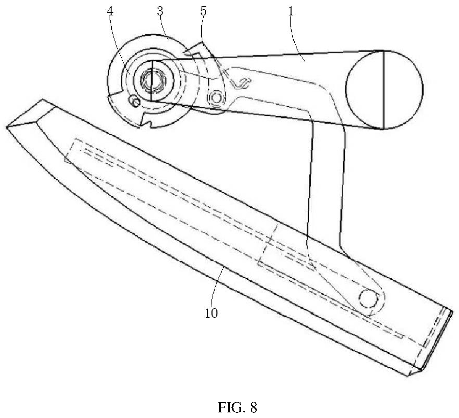

Referring to FIGS. 5-8, the movement process of the table board body 10 from the optimal unfolded state to the retracted state is illustrated:

The table board body 10 is in the optimal unfolded state, when the second end of the pawl 5 is connected to the locking groove 32, the pawl 5 is in a locked state, such that the bracket assembly is in the optimal unfolded state, and the position of the table board body 10 is locked. The table board body 10 is lifted up, the second bracket 2 is rotated clockwise, driving the second end of the pawl 5 to move from the locking groove 32 onto the limiting protrusion 41, and the pawl 5 is in a transition state to switch the bracket assembly from the optimal unfolded state to the adjustment state. The table board body 10 is pressed down, the second bracket 2 is rotated anticlockwise, the friction force between the second end of the pawl 5 and the limiting protrusion 41 is used for driving the transition wheel 4 to rotate around the connecting shaft 6, such that the limiting protrusion 41 is capable of concealing the locking groove 32, the second end of the pawl 5 will not enter the locking groove 32 and is capable of moving directly from the limiting protrusion 41 to the ratchet wheel body 31, and the pawl 5 is in an unlocked state to switch the bracket assembly from the adjustment state to the retracted state. Then, the table board body 10 is pressed down, the transition wheel 4 is restricted by the limiting pin 8 to no longer rotate anticlockwise, the pawl 5 is disengaged from the limiting protrusion 41, crosses the locking groove 32 on the ratchet wheel 3 and falls on the ratchet wheel body 31 (i.e. the smooth area). Meanwhile, the table board body 10 is rotated around the second end of the second bracket 2. The table board body 10 continues to be pressed down and is rotated accordingly, such that the table board body 10 is capable of being fully retracted.

In one embodiment, referring to FIG. 4, when the table board body 10 is in the optimal unfolded state, the height difference between the tabletop height and the vehicle hip point height is 250-300 mm.

As an example, the vehicle hip point, namely the point H of the vehicle, refers to the point where the buttocks of a driver are positioned on a driving seat, and is a reference point for determining the position of the driver or passenger in the seat. The point H is the rotation point (hip point) where the trunk and thigh connect. The "hip point" position measured on the actual vehicle is called the point H. To ensure the convenience of use after the table board body 10 is unfolded, the structural parameters of the bracket assembly are adjusted to match the appropriate height of the table board body 10. When the table board body 10 is in the optimal unfolded state, the height difference between the tabletop height and the vehicle hip point height is 250-300 mm, such that the height of the table board body 10 reaches an appropriate range, preventing interference with the passenger's knees and creating a comfortable usage scenario for the front passenger. This enhances the differentiated experience of users and improves product competitiveness.

An embodiment of the present application provides a vehicle including the front structure of the vehicle body.

As an example, the front structure of the vehicle body includes the table board assembly and a sub-frame instrument assembly 12. The crossbeam 9 of the table board assembly is fixed on the sub-frame instrument assembly 12. By rotating the second bracket 2, the first end of the second bracket 2 is rotated around the connecting shaft 6, which is capable of driving the pawl 5 to rotate, such that the second end of the pawl 5 is connected with any one of the locking groove 32, the limiting protrusion 41 and the ratchet wheel body 31, so as to adjust the working state of the bracket assembly. The specific adjustment process is as follows: first, the second bracket 2 is rotated clockwise, and when the second end of the pawl 5 is connected with the locking groove 32, the pawl 5 is in a locked state, such that the bracket assembly is in the optimal unfolded state; then the second bracket 2 continues to be rotated clockwise, driving the second end of the pawl 5 to move from the locking groove 32 onto the limiting protrusion 41, and the pawl 5 is in a transition state to switch the bracket assembly from the optimal unfolded state to the adjustment state; then the second bracket 2 is rotated anticlockwise, the friction force between the second end of the pawl 5 and the limiting protrusion 41 is used for driving the transition wheel 4 to rotate around the connecting shaft 6, such that the limiting protrusion 41 is capable of concealing the locking groove 32, the second end of the pawl 5 will not enter the locking groove 32 and is capable of moving directly from the limiting protrusion 41 to the ratchet wheel body 31, and the pawl 5 is in the unlocked state to switch the bracket assembly from the adjustment state to the retracted state; and then the second bracket 2 is rotated until the bracket assembly is fully retracted. The locking groove 32 is formed in the ratchet wheel body 31, the mounting position of the locking groove 32 is capable of being adjusted according to the actual situation, such that when the bracket assembly is fully unfolded, the height of the table board body 10 reaches an appropriate range, preventing interference with the passenger's knees and creating a comfortable usage scenario for the front passenger. This enhances the differentiated experience of users and improves product competitiveness.

The above description is only a preferred embodiment of the present disclosure and is not intended to limit the present disclosure. Any modifications, equivalent substitutions, and improvements made within the gist and principles of the present disclosure should be included within the protection scope of the present disclosure.

## Claims

1. A bracket assembly, **characterized by** comprising a first bracket, a second bracket, a ratchet wheel, a transition wheel and a pawl, wherein
a first end of the first bracket is provided with a connecting shaft;
a first end of the second bracket is rotatably mounted on the connecting shaft;
the ratchet wheel is mounted on the connecting shaft, and the ratchet wheel comprises a ratchet wheel body and a locking groove formed in the ratchet wheel body;
the transition wheel is rotatably mounted on the connecting shaft and is provided with a limiting protrusion, the projection of the limiting protrusion along an axial direction of the connecting shaft is partially located outside the projection of the ratchet wheel body along the axial direction of the connecting shaft; and
a first end of the pawl is rotatably mounted on the second bracket, and a second end of the pawl is connected to any one of the locking groove, the limiting protrusion and the ratchet wheel body, so as to adjust the working state of the bracket assembly.

2. The bracket assembly according to claim 1, wherein the bracket assembly further comprises a spring, a first end of the spring is fixed on the second bracket, and a second end of the spring is connected to the second end of the pawl.

3. The bracket assembly according to claim 1, wherein the transition wheel is provided with a limiting groove, the bracket assembly further comprises a limiting pin, and the limiting pin is fixed on the ratchet wheel by means of penetrating through the limiting groove.

4. The bracket assembly according to claim 1, wherein the second bracket comprises a first connecting portion, a second connecting portion and a third connecting portion obliquely extending outwards in a same direction from both ends of the first connecting portion, a fourth connecting portion extending out at an obtuse angle from the outer side of one end of the second connecting portion, a fifth connecting portion extending out at an obtuse angle from the outer side of one end of the third connecting portion, and a connecting disc extending out from the fourth connecting portion;
wherein the connecting disc is rotatably mounted on the connecting shaft, the fifth connecting portion is configured to connect with an object to be used, and the first end of the pawl is rotatably mounted on the second connecting portion.

5. A table board assembly, **characterized by** comprising the bracket assembly according to any one of claims 1-4, a crossbeam, and a table board body, wherein
a second end of the first bracket of the bracket assembly is fixed on the crossbeam; and
a second end of the second bracket of the bracket assembly is rotatably connected to the tablet board body.

6. The table board assembly according to claim 5, wherein the table board body is provided with at least one mounting groove, and each of the at least one mounting groove is internally provided with one second bracket.

7. The table board assembly according to claim 6, wherein the mounting groove is a strip-shaped groove, and the second end of the second bracket is rotatably mounted in the strip-shaped groove.

8. A front structure of a vehicle body, **characterized by** comprising the table board assembly according to any one of claims 5-7 and a sub-frame instrument assembly;
wherein a crossbeam of the table board assembly is fixed on the sub-frame instrument assembly.

9. The front structure of the vehicle body according to claim 8, wherein when the table board body is in an optimal unfolded state, the height difference between the tabletop height and the vehicle hip point height is 250-300 mm.

10. A vehicle, **characterized by** comprising the front structure of the vehicle body according to any one of claims 8-9.
